(19) Europäisches Patentamt
European Patent Office
Office européen des brevets

(11) **EP 3 485 659 B1**

(12) **FASCICULE DE BREVET EUROPEEN**

(45) Date de publication et mention
de la délivrance du brevet:
**09.09.2020 Bulletin 2020/37**

(21) Numéro de dépôt: **17758221.0**

(22) Date de dépôt: **18.07.2017**

(51) Int Cl.:
***H04W 4/02*** *(2018.01)*

(86) Numéro de dépôt international:
**PCT/FR2017/051958**

(87) Numéro de publication internationale:
**WO 2018/015655 (25.01.2018 Gazette 2018/04)**

(54) **PROCÉDÉ ET DISPOSITIF DE SUIVI DU DÉPLACEMENT DE PERSONNES DANS UN ENVIRONNEMENT, NOTAMMENT DANS UN RÉSEAU DE TRANSPORT**

**VERFAHREN UND VORRICHTUNG ZUR ÜBERWACHUNG DER BEWEGUNG VON PERSONEN IN EINER UMGEBUNG, INSBESONDERE IN EINEM TRANSPORTNETZ**

**METHOD AND DEVICE FOR MONITORING THE MOVEMENT OF PEOPLE IN AN ENVIRONMENT, PARTICULARLY IN A TRANSPORT NETWORK**

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**

(30) Priorité: **18.07.2016 FR 1656835**

(43) Date de publication de la demande:
**22.05.2019 Bulletin 2019/21**

(73) Titulaire: **FLOWLY**
**92130 Issy-les-Moulineaux (FR)**

(72) Inventeur: **Tenenbaum, Julien**
**97411 Saint-Paul (FR)**

(74) Mandataire: **Ipside**
**29, rue de Lisbonne**
**75008 Paris (FR)**

(56) Documents cités:
**WO-A1-2016/038415      WO-A2-2014/037949**
**US-A1- 2009 210 141**

## Description

### DOMAINE TECHNIQUE DE L'INVENTION

Le domaine de l'invention est celui de la gestion de données.

Plus précisément, l'invention concerne un dispositif de suivi du déplacement de personnes dans un environnement.

L'invention trouve notamment des applications dans le domaine du transport public de voyageurs dans un réseau de transport monomodal ou multimodal, comprenant plusieurs lignes de bus, de métro et/ou de tramways. L'invention trouve également des applications dans le domaine du commerce, dans la gestion d'un domaine skiable de parcs d'activité ou de parcs de loisirs.

### ÉTAT DE LA TECHNIQUE

La connaissance précise des flux de déplacements réguliers d'individus est importante pour l'aménagement de l'environnement, comme par exemple pour la disposition des étals dans une surface de vente, ou pour l'élaboration de l'offre de transport la plus adéquate comprenant la création ou la suppression de lignes, l'adaptation en temps réel de la fréquence d'une ligne, etc.

Il est connu de l'état de l'art des techniques qui permettent de compter le nombre de personnes à un point donné, comme par exemple un système de billettique indiquant le nombre de titres validés ou un compteur optique, indiquant le nombre de passages dans le champ optique.

L'inconvénient majeur de ces techniques est qu'elles n'indiquent seulement le flux à un point donné sans tenir compte du trajet effectué ou à effectuer par l'individu. En effet, les données de billettique fournissent généralement le point de montée d'un individu dans un véhicule, tel un bus ou un tramway, où le voyageur valide son titre de transport en montant à l'intérieur, sans connaître le point de descente du voyageur, l'itinéraire suivi ni les correspondances effectuées.

Les correspondances entre les réseaux ne sont détectées que lorsque les systèmes billettiques entre les différents modes de transports sont interopérables.

Il est également connu des systèmes de comptages automatiques dans les véhicules comme des caméras 3D, des marches de comptages ou des détecteurs placés dans les places assises du véhicule, placés judicieusement dans un véhicule afin de compter le nombre de montée et de descente dans le véhicule.

L'inconvénient de ces techniques est qu'elles permettent uniquement de connaitre le nombre de passagers embarqués et de suivre la charge du véhicule sur son parcours, mais non d'en déduire le trajet des passagers, c'est-à-dire l'origine et la destination des passagers.

Afin de remédier à cet inconvénient, il est connu d'utiliser des enquêtes de terrain permettant de caractériser de manière précise la mobilité des clients : flux de personnes par service, par ligne, origines et destinations, taux de correspondances entre les réseaux....

L'inconvénient majeur de ces enquêtes est qu'elles sont coûteuses, longues à mener et à traiter avant de fournir des résultats présentables. Elles fournissent également des données correspondant à la période du sondage et doivent être renouvelées régulièrement pour disposer d'informations à jour. Les documents WO 2016/038415, US 2009/210141 et WO 2014/037949 sont considérés comme état de la technique.

### OBJECTIFS DE L'INVENTION

L'invention est définie par les revendications.

La présente invention vise à remédier à tout ou partie des inconvénients de l'état de la technique cités ci-dessus.

Un des principaux objectifs de l'invention est de proposer une technique qui permette de suivre le déplacement d'un utilisateur, à savoir dans le cas d'un réseau de transport, l'itinéraire effectué tenant compte des correspondances et des temps d'attente aux correspondances.

Un autre objectif principal de l'invention est d'effectuer une cartographie à chaque instant de flux de déplacement des utilisateurs.

Un autre objectif de l'invention est de permettre d'effectuer une analyse statistique ou graphique, en temps réel ou en différé, pour rendre compte des évolutions temporelles des flux de déplacement dans l'environnement.

Un autre objectif de l'invention est de proposer une technique qui permette aux opérateurs de transports d'analyser leur réseau.

Un autre objectif de l'invention est de pouvoir prédire les flux de déplacement à partir de l'analyse des déplacements d'individus précédemment enregistrés dans des situations similaires.

Enfin, un autre objectif de l'invention est de permettre à chaque utilisateur de mieux appréhender son déplacement dans l'environnement, notamment dans un réseau de transport.

### EXPOSÉ DE L'INVENTION

Ces objectifs, ainsi que d'autres qui apparaîtront par la suite sont atteints à l'aide d'un procédé d'analyse du déplacement effectué par un individu portant un dispositif électronique communiquant dans un environnement.

Le dispositif électronique communiquant peut-être un téléphone intelligent, plus connu sous le nom de smartphone, une tablette, un ordinateur portable, etc. De manière générale, le dispositif électronique communiquant comprend un moyen de communication sans fil avec un autre dispositif électronique communiquant. La norme de communication sans fil peut-être par exemple de type Wi-Fi ou de type Bluetooth®. Il convient de souligner que lorsque le Wi-Fi est allumé sur un dispositif électronique, le dispositif électronique émet à intervalles réguliers un signal comprenant son identifiant, en l'occurrence une adresse réseau.

L'environnement peut être par exemple un réseau de transport mono- ou multi-modal, un espace public comme une surface de vente, un domaine skiable, etc.

Selon l'invention, l'environnement comprend une pluralité de bornes connectées à un serveur distant, chaque borne étant apte à collecter les signaux émis à portée de ladite borne, et le procédé comprend les étapes dans lesquelles :

a) pour chaque passage de l'individu à portée d'une borne collectant au moins un signal émis par le dispositif électronique porté par l'individu pendant un cycle de détection de ladite borne, ladite borne relève ledit passage dans un enregistrement comprenant l'identification du dispositif électronique, la puissance instantanée du signal collecté , la position de la borne et l'horodatage du signal collecté ;

b) le serveur analyse le déplacement effectué par l'individu en traitant les enregistrements.

Ainsi, le procédé permet de suivre le déplacement de l'individu portant un dispositif électronique communiquant, par l'intermédiaire de la collecte des signaux émis par ledit dispositif électronique. Il convient de souligner que si le dispositif électronique communiquant est éteint ou si les communications par Wi-Fi ou Bluetooth sont désactivés, l'individu portant ledit dispositif n'est pas détecté.

Les bornes effectuent généralement un cycle de détection durant lequel chaque borne relève les signaux émis par les dispositifs électroniques communiquant à portée de la borne. Il convient de souligner que si plusieurs signaux sont émis par le même dispositif électronique pendant un même cycle de détection, la borne ne relève généralement qu'un seul desdits signaux émis. La durée du cycle de détection peut être configurée de l'ordre de la seconde ou de la minute. Deux cycles de détection consécutifs sont généralement contigus, permettant d'effectuer une détection en continu par exemple tout le long d'une journée ou d'un mois, mais ils peuvent également être espacés dans le temps.

D'autre part, il convient également de noter qu'il est possible qu'au cours d'un cycle de détection d'une borne, qu'aucun signal ne soit émis par un dispositif électronique communiquant se trouvant à portée de ladite borne. C'est notamment le cas des dispositifs électroniques en mode « économie d'énergie », où afin d'économiser la batterie, l'intervalle entre l'émission de deux signaux est long. Cet intervalle peut ainsi être supérieur à la durée d'un cycle de détection par une borne.

L'enregistrement commence au moment où l'individu est détecté à portée d'une des bornes, c'est-à-dire lorsqu'un signal émis par le dispositif électronique porté par l'individu est collecté et se termine automatiquement après le dernier signal collecté ou après un laps de temps prédéfini, généralement un multiple du cycle de détection de la borne. L'enregistrement comprend au plus N relevés de signaux, N étant égal au nombre de cycles de détection effectués pendant l'enregistrement.

Les bornes peuvent être avantageusement agencées dans l'environnement pour couvrir la majorité de l'environnement, préférentiellement au moins 80 % de l'environnement. Il convient de souligner que les bornes ont une portée limitée, dépendante de la technologie utilisée, notamment de la fréquence de la porteuse, et de leur puissance.

Dans le cas où l'environnement est un réseau de transport comprenant un ou plusieurs modes de transports ferrés, routiers ou autres, chaque véhicule ou arrêt peut comprendre un ou plusieurs bornes de collecte des signaux. Le véhicule peut être routier tel qu'un bus, ou ferré tel qu'une rame de métro, une voiture d'un train, un tramway.

L'analyse du déplacement peut être effectuée sur la totalité ou une sélection des enregistrements acquis. En d'autres termes, un tri des enregistrements peut être effectué afin de sélectionner les enregistrements représentatifs des déplacements, en retirant par exemple les données ne correspondant pas à des utilisateurs du réseau à analyser ou des doublons lorsqu'un individu porte par exemple deux dispositifs électroniques communiquant.

Le serveur peut être distant ou inclus dans une des bornes.

Dans un mode de réalisation particulier de l'invention, le procédé comprend avant l'étape b) une étape de sélection des enregistrements à traiter dans laquelle un enregistrement est sélectionné lorsqu'il présente une durée supérieure à une valeur prédéterminée, la durée de l'enregistrement étant égale au temps écoulé entre le plus ancien et le plus récent signal relevé au cours de l'enregistrement.

Ainsi, l'enregistrement sélectionné traduit le fait que l'utilisateur reste à portée d'une borne pendant une période donnée. La durée de la période peut correspondre par exemple à la durée entre deux arrêts d'un véhicule à l'intérieur duquel se trouve l'utilisateur.

Dans un mode de réalisation particulier de l'invention, le procédé comprend avant l'étape b) une étape de sélection des enregistrements à traiter dans laquelle un enregistrement est sélectionné lorsque la puissance du signal dépasse un seuil prédéterminé.

Ainsi, l'enregistrement sélectionné traduit le fait que l'utilisateur reste à une distance sensiblement constante de la borne. En d'autres termes, l'enregistrement est sélectionné lorsque les signaux sont stables.

Dans un mode de réalisation particulier de l'invention, chaque enregistrement comprend également la vitesse de la borne dans l'environnement. Le procédé comprend avant l'étape b) une étape de sélection des enregistrements à traiter dans laquelle un enregistrement comprenant des signaux relevés par une borne mobile lorsque la vitesse de ladite borne est inférieure à cinq kilomètres par heure est sélectionné uniquement si l'enregistrement comprend également des signaux relevés par ladite borne lorsque la vitesse de ladite borne est supérieure à cinq kilomètres par heure..

En d'autres termes, un enregistrement comprenant uniquement des signaux relevés par une borne mobile dont la vitesse est inférieure à cinq kilomètres par heure n'est pas sélectionné.

Ainsi, par exemple lorsque la borne est installée dans un véhicule, les enregistrements sélectionnés comprennent des signaux collectés pendant le déplacement du véhicule. Les signaux d'un dispositif électronique collectés à l'arrêt du véhicule ne sont considérés que dans le cas où des signaux de ce dispositif électronique sont collectés pendant le déplacement du véhicule. Ce tri est effectué afin d'éviter de prendre en compte des signaux de dispositifs portés par des individus non présents dans le véhicule, situés par exemple à l'extérieur du véhicule lors d'un arrêt.

Il convient de souligner que lorsque la borne est installée dans un véhicule, la vitesse de la borne est égale à la vitesse du véhicule.

Dans un mode de réalisation particulier de l'invention, le procédé comprend avant l'étape b) une étape de sélection des enregistrements à traiter dans laquelle lorsqu'un dispositif électronique est enregistré quasi-simultanément par deux bornes distinctes, un seul des deux enregistrements est sélectionné selon l'un des critères suivants :

-   l'enregistrement sélectionné correspond à l'enregistrement ayant la durée la plus longue ;
-   l'enregistrement sélectionné correspond à l'enregistrement ayant la puissance la plus forte.

Par exemple lorsque deux véhicules, comprenant chacun une borne de collecte, sont à proximité l'un de l'autre, chaque borne collecte des signaux provenant de dispositifs électroniques portés par des individus présents dans l'un ou l'autre des véhicules. En sélectionnant sur la durée de l'enregistrement, voire sur la valeur de la puissance, le procédé peut ainsi sélectionner les signaux provenant de l'un ou de l'autre véhicule.

Dans un mode de réalisation particulier de l'invention, le procédé comprend avant l'étape b) une étape de sélection des enregistrements à traiter dans laquelle lorsqu'au moins deux enregistrements effectués par une même borne présentent des signaux ayant des variations de puissance similaires sur la majeure partie des deux enregistrements, un seul desdits enregistrements est sélectionné.

Ainsi, lorsqu'un individu porte plusieurs dispositifs électroniques émettant des signaux collectés par la borne, seul un seul des enregistrements effectués est sélectionné. La sélection peut être effectuée grâce au type du dispositif électronique lorsque le type est compris dans le signal émis par le dispositif électronique. Le type du dispositif peut notamment indiquer s'il s'agit d'un téléphone, d'une tablette, d'un ordinateur, d'une oreillette, etc.

Dans un mode de réalisation particulier de l'invention, l'environnement comprend des bornes passives.

Une borne est dite passive lorsqu'elle n'émet pas de signal activant l'émission d'un signal par les dispositifs électroniques à portée de la borne passive.

Dans un mode de réalisation particulier de l'invention, l'identification acquise est l'adresse MAC (acronyme anglais de « *Media Access Control* ») du dispositif électronique communiquant.

L'adresse MAC, également appelée adresse physique, est une adresse réseau unique qui permet d'identifier chaque appareil communiquant.

Dans un mode de réalisation particulier de l'invention, le procédé comprend une étape de suivi d'un identifiant d'un dispositif électronique dans le temps.

Ainsi, il est possible de connaître les déplacements usuels d'un dispositif électronique particulier.

Dans un mode de réalisation particulier de l'invention, l'environnement est un réseau de transport comprenant un ou plusieurs modes de transports mettant en œuvre des véhicules équipés d'au moins une borne, et en ce que l'analyse du déplacement de l'individu comprend la détermination de l'itinéraire suivi par l'individu dans le réseau de transport, des correspondances effectuées par l'individu et des temps d'attente auxdites correspondances.

Dans un mode de mise en œuvre particulier de l'invention, l'analyse du déplacement de l'individu comprend une sous-étape de calcul de probabilité de montée ou de descente de l'individu à un arrêt compris dans le réseau de transport.

Dans un mode de mise en œuvre particulier de l'invention, l'analyse du déplacement de l'individu comprend une sous-étape de calcul de probabilité d'un trajet lié à un enregistrement, dit enregistrement initial, et à au moins un enregistrement corrigé, l'enregistrement corrigé étant déterminé à partir de l'enregistrement initial auquel un relevé fictif est ajouté au début et/ou à la fin de l'enregistrement initial.

L'invention concerne également un procédé d'analyse des déplacements effectués par une population d'individus dans un environnement, mettant en œuvre un procédé d'analyse du déplacement d'un individu, la population comprenant des individus portant un dispositif électronique communiquant.

A partir des déplacements d'une partie de la population, il est possible de remonter aux déplacements de l'ensemble, par l'intermédiaire d'un traitement statistique.

Dans un mode de réalisation particulier de l'invention, l'environnement est un réseau de transport comprenant un système de billettique, et les déplacements de la population sont déterminés à partir des déplacements d'individus portant un dispositif électronique communiquant et des données de la billettique.

Ainsi, les données de la billettique permettent d'indiquer quel est le nombre de personnes qui ont validé leur ticket. En corrélant les données de la billettique et les personnes portant un dispositif électronique communiquant, il est possible de déterminer un flux représentatif des déplacements de l'ensemble de la population. Il convient de souligner que les données de la billettique peuvent être majorées afin de tenir compte d'un taux de fraude moyen estimé en fonction du territoire desservi et de l'heure, par exemple entre 5 % et 10 %.

Dans un mode de réalisation particulier de l'invention, l'environnement est un réseau de transport comprenant un ou plusieurs modes de transports mettant en œuvre des véhicules équipés d'au moins une borne et d'un compteur de charge, et les déplacements de la population sont déterminés à partir des déplacements d'individus portant un dispositif électronique communiquant et de données du compteur de charge.

Le compteur de charge permet notamment d'indiquer le nombre de personnes présentes dans un véhicule.

Dans un mode de réalisation particulier de l'invention, le procédé d'analyse des déplacements effectués par une population comprend une étape de prédiction des flux de déplacement à partir de l'analyse des déplacements d'individus précédemment enregistrés.

L'invention concerne également un dispositif d'analyse des déplacements d'au moins un individu dans un environnement, l'un au moins des individus portant un dispositif électronique communiquant, ledit dispositif comprenant :

- une pluralité de bornes de collecte passive des signaux émis par des dispositifs électroniques situés à portée de chaque borne, la collecte permettant d'effectuer un enregistrement comprenant l'identification du dispositif électronique, la puissance instantanée du signal émis à chaque instant de l'enregistrement, la position de la borne et l'horodatage du début et de la fin de l'enregistrement ;
- un serveur distant traitant les enregistrements transmis par les bornes pour déterminer les déplacements effectués par les individus dans l'environnement ;
- des moyens de restitution des déplacements effectués par les individus dans l'environnement.

Dans un mode de réalisation particulier de l'invention, le dispositif comprend également des moyens de géolocalisation en temps réel de chaque borne.

La géolocalisation peut être effectuée par l'intermédiaire d'un GPS (acronyme anglais de « *Global Positioning System* »). En connaissant la position en temps réel de la borne, il est possible d'en déduire la vitesse lorsque la borne est mobile.

Dans un mode de réalisation particulier de l'invention, l'environnement est un réseau de transport comprenant une pluralité de véhicules permettant de déplacer au moins un individu dans l'environnement, la majorité des véhicules comprenant au moins une borne de collecte. Dans ce mode, les moyens de restitution des déplacements comprennent un écran affichant les flux de déplacements des individus dans le réseau de transport.

Dans un mode de réalisation particulier de l'invention, l'environnement est un réseau de transport comprenant une pluralité de véhicules permettant de déplacer au moins un individu dans l'environnement, la majorité des véhicules comprenant au moins une borne de collecte et un odomètre. L'enregistrement effectué par la borne comprend la vitesse acquise par l'odomètre du véhicule.

## BRÈVE DESCRIPTION DES FIGURES

D'autres avantages, buts et caractéristiques particulières de la présente invention ressortiront de la description non limitative qui suit d'au moins un mode de réalisation particulier des dispositifs et procédés objets de la présente invention, en regard des dessins annexés, dans lesquels :

- la figure 1 représente un exemple de dispositif d'analyse des déplacements selon l'invention ;
- la figure 2 illustre le procédé d'analyse sous la forme d'un schéma synoptique ;
- la figure 3 représente schématiquement un exemple d'enregistrement par rapport à un trajet d'un bus.

## DESCRIPTION DÉTAILLÉE DE MODES DE RÉALISATION DE L'INVENTION

La présente description est donnée à titre non limitatif, chaque caractéristique d'un mode de réalisation pouvant être combinée à toute autre caractéristique de tout autre mode de réalisation de manière avantageuse.

On note, dès à présent, que les figures ne sont pas à l'échelle.

Exemple d'un mode de réalisation particulier de l'invention

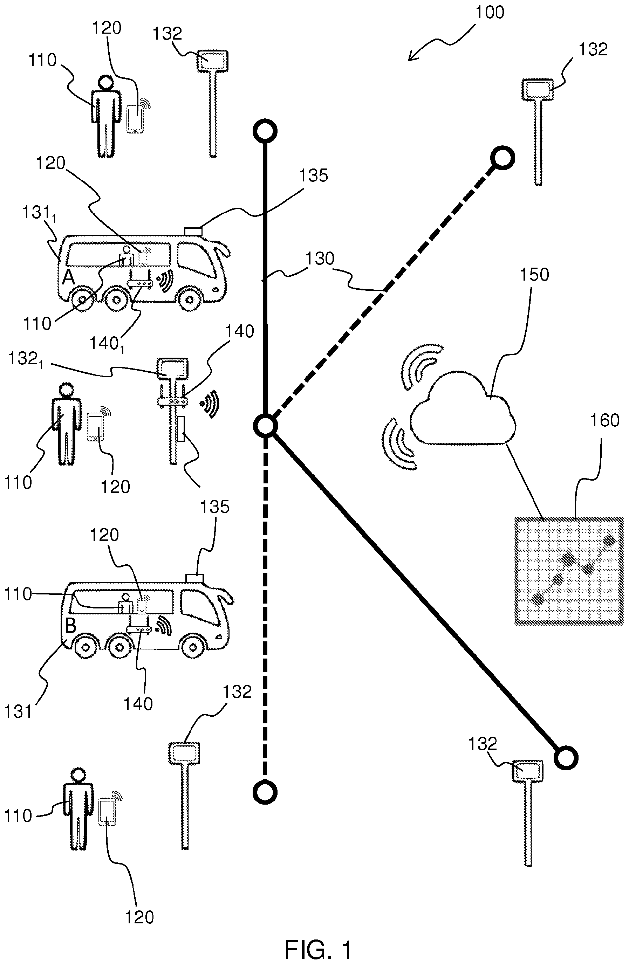

La figure 1 représente un dispositif 100 d'analyse des déplacements dans un réseau de transport d'au moins un individu 110 portant au moins un dispositif électronique communiquant. L'individu 110 fait partie d'une population d'individus se déplaçant dans le réseau de transport. Dans le présent exemple non limitatif de l'invention, l'individu 110 porte un smartphone 120 émettant sensiblement toutes les dix secondes un signal Wi-Fi.

Le réseau de transport comprend dans le présent exemple non limitatif de l'invention deux lignes 130 de bus 131 comprenant des arrêts 132 permettant à l'individu 110 de monter ou de descendre dans un des bus 131. Un arrêt $132_1$ permet d'effectuer la correspondance entre les deux lignes 130 de bus.

Le dispositif 100 comprend une borne 140 installée dans chaque bus 131, sensiblement à l'aplomb du centre dudit bus 131, et avantageusement à l'arrêt de correspondance $132_1$.

Il convient de souligner qu'il n'est pas nécessaire d'installer une borne 140 à chaque arrêt 132 afin que le dispositif 100 soit fonctionnel. Néanmoins, il est avantageux d'en installer au niveau des arrêts de correspondance ou des grandes gares routières du réseau de transport afin de pouvoir suivre le déplacement et les temps d'attente au sol d'un individu portant un dispositif électronique communiquant.

Chaque borne 140 permet de collecter passivement des signaux Wi-Fi émis par un dispositif électronique communiquant à portée de ladite borne 140. A cet effet, chaque borne 140 effectue des cycles de détection, dont la durée est dans le présent exemple de l'ordre de trente secondes.

Lorsque l'individu 110 est à proximité d'une des bornes 140, ladite borne 140 relève le passage de l'individu 110 en collectant un signal émis par le smartphone 120 pendant chaque cycle de détection durant lesquels l'individu 110 est à portée de ladite borne 140.

Il convient de souligner qu'un seul passage de l'individu 110 est relevé par cycle de détection alors que dans le présent exemple le smartphone 120 émet trois fois au cours de chaque cycle de détection.

Chaque passage de l'individu 110 est relevé au sein d'un enregistrement qui comprend pour chaque signal collecté :

- l'identification réseau du smartphone 120, à savoir son adresse MAC ;
- la puissance instantanée du signal collecté ;
- l'horodatage du signal et la position de la borne 140 indiquée par un système de géolocalisation 135 par GPS, installé dans chaque bus 131 ou à l'arrêt de correspondance $132_1$.

La durée d'un enregistrement est déterminée égale au temps écoulé entre le plus ancien et le plus récent signal relevé au cours d'un enregistrement. Il convient de souligner que lorsqu'un intervalle trop important entre la collecte de deux signaux émis par le smartphone 120 est relevé par une même borne 140, un nouvel enregistrement est automatiquement créé. La durée d'un intervalle trop important est par exemple supérieure à dix fois la durée d'un cycle de détection de la borne. Par défaut, la durée d'un intervalle trop important est fixée à cinq minutes. En d'autres termes, si aucun signal provenant du smartphone 120 n'est reçu dans les cinq minutes suivant la réception d'un signal provenant du même smartphone 120, l'enregistrement peut dans certaines applications être considéré comme clos.

Le dispositif 100 comprend également un serveur distant 150 relié à chaque borne 140 par le réseau GSM (acronyme anglais de « Global System for Mobile Communications ») et recevant les enregistrements effectués par les bornes 140. Le serveur distant comprenant un processeur et une mémoire est relié à un écran 160 permettant de restituer les résultats de l'analyse effectué par le serveur 150.

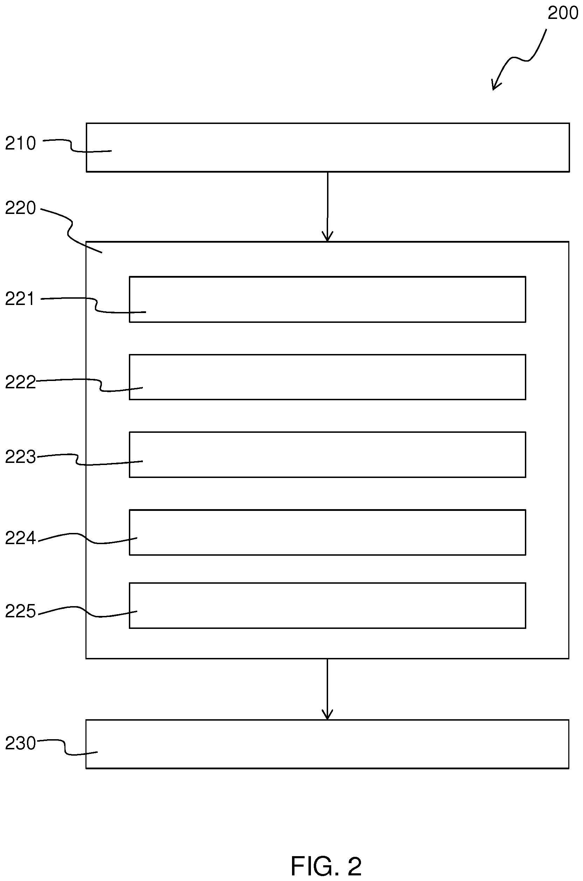

La figure 2 représente un schéma synoptique d'un procédé 200 d'analyse du déplacement de l'individu 110.

Le procédé 200 comprend une première étape de collecte des signaux émis par le smartphone 120.

A partir des enregistrements effectués au cours la première étape 210 grâce aux bornes 140, les enregistrements sont triés au cours d'une deuxième étape 220 avant d'être traités au cours d'une troisième étape 230.

Le tri des enregistrements effectués au cours de la deuxième étape 220 aboutit à une sélection comprenant la totalité ou une partie des enregistrements collectés par chaque borne 140.

La deuxième étape 220 comprend une sousétape 221 permettant de sélectionner les enregistrements effectués par une borne $140_1$ d'un bus $131_1$, présentant une durée supérieure à une valeur prédéterminée, en l'occurrence dans le présent exemple non limitatif de l'invention à la durée entre deux arrêts successifs. Grâce à ce tri, un enregistrement comprenant par exemple la collecte d'un signal ponctuel collecté entre deux arrêts n'est pas pris en compte. En effet, un signal collecté ponctuellement peut être émis par un dispositif électronique communiquant situé à l'extérieur du bus $131_1$, présent par exemple dans une voiture circulant à proximité du bus $131_1$.

La deuxième étape 220 comprend également une sous-étape 222 permettant de sélectionner les enregistrements effectués par une borne 140 dont les signaux collectés ont une puissance supérieure à un seuil prédéterminé. La puissance d'un signal étant fonction du carré de la distance de l'émetteur, en l'occurrence le smartphone 120, le seuil permet de sélectionner les signaux émis à proximité de la borne 140. Dans le cas d'un bus 131 où la borne 140 est sensiblement située au centre du bus 131, le seuil est avantageusement configuré afin de prendre en compte les signaux émis dans un rayon d'une demi-longueur du bus 131.

Grâce à ce deuxième tri, un enregistrement comprend un signal ayant une puissance inférieure au seuil n'est pas pris en compte dans le traitement. En effet, un signal ayant une puissance au seuil est considéré comme étant émis à l'extérieur du bus 131.

La deuxième étape 220 comprend également une sous-étape 223 permettant de trier les enregistrements effectués par les bornes 140 situés dans les bus 131, c'est-à-dire les bornes qui sont considérées comme étant mobiles. Pour les enregistrements effectués par une borne mobile $140_1$ installée dans un bus $131_1$, le tri

effectué au cours de la sous-étape 223 sélectionne les enregistrements comprenant des signaux relevés à l'arrêt du bus $131_1$, c'est-à-dire lorsque la vitesse du bus $131_1$ est inférieure à 5 km/h, uniquement lorsque l'enregistrement comprend également des signaux relevés pendant le déplacement du bus $131_1$, c'est-à-dire lorsque la vitesse du bus $131_1$ est supérieure à 5 km/h. En d'autres termes, un enregistrement comprenant uniquement des signaux relevés par la borne $140_1$ dont la vitesse est inférieure à cinq kilomètres par heure n'est pas sélectionné.

Il convient de souligner que le seuil de vitesse minimum au-dessous duquel le bus est considéré à l'arrêt est généralement fixé à cinq kilomètres par heure, mais que ce seuil peut être ajusté suivant les moyens de transport.

Les enregistrements peuvent également être triés en ne considérant que les enregistrements comprenant un nombre minimum de relevé de signaux. Le nombre minimum de relevés de signaux varie en fonction de l'intervalle de détection et la nature du trajet.

Les enregistrements retenus correspondent généralement à ceux pour lesquels le ratio entre la durée totale de l'enregistrement et le produit de la durée du cycle de détection par le nombre de détection est inférieur à dix ou à une valeur résultant de l'expérience ou de la confrontation avec des données issues de la billettique ou d'enquêtes.

Voici un exemple d'un enregistrement retenu pour le dispositif électronique 120 :

- Durée totale de l'enregistrement : 500 secondes
- Durée du cycle de détection : 40 secondes
- Nombre de relevés, chaque relevé correspondant à une détection du dispositif électronique 120 : 5
- Ratio = 500 / (40 x 5) = 2.5

Il convient de souligner que le nombre minimum de relevés peut également être ajusté selon la nature de la ligne ou l'intervalle de détection.

En d'autres termes, le ou les tris utilisés au cours de l'étape 220 permettent de déterminer les enregistrements provenant des dispositifs électroniques communiquants en mouvement avec le bus $131_1$.

La deuxième étape 220 comprend également une sous-étape 224 permettant d'attribuer l'enregistrement d'un signal collecté quasi-simultanément par deux bornes 140 distinctes à l'une ou l'autre des deux bornes 140. Ce tri est utile dans le cas où deux bus 131 ayant chacun une borne 140 sont l'un à côté de l'autre, ce qui est fréquent dans un milieu urbain.

Pour l'attribution du signal, un premier critère est utilisé sur la durée de l'enregistrement effectué par chaque borne 140. L'enregistrement considéré est celui dont la durée est la plus longue.

Lorsque ce critère ne permet pas de sélectionner l'un ou l'autre des enregistrements, l'enregistrement considéré est celui dont la puissance du signal relevé est la plus forte.

Dans le cas où l'individu 110 porte également un deuxième dispositif électronique communiquant, comme par exemple un smartphone et une tablette, deux signaux sont collectés par la même borne 140. Afin de sélectionner qu'un seul des enregistrements effectués, la deuxième étape 220 comprend une sous-étape 225 qui analyse les variations de puissance des enregistrements effectués par une même borne 140. Lorsque deux enregistrements présentent des variations similaires sur la majeure partie des deux enregistrements, un seul des deux enregistrements est considéré dans le traitement.

Dans une variante de ce mode de réalisation particulier de l'invention, lorsque deux enregistrements présentent des similarités de durée et de puissance, mais avec des natures de dispositifs différentes (par exemple : un smartphone et une tablette, ou un téléphone et une oreillette), un seul des deux enregistrements est sélectionné pour le traitement.

A partir des enregistrements triés par l'intermédiaire de l'un ou de plusieurs des tris de la deuxième étape 220, un traitement des enregistrements est effectué au cours de la troisième étape 230.

Le déplacement de l'individu 110 est déterminé grâce aux enregistrements des bornes 140 agencées sur le parcours de l'individu 110, à la fois dans les bus 131 et au niveau de l'arrêt de correspondance $132_1$. Il convient de souligner que les bornes au niveau des arrêts 132 ne sont pas nécessaires pour suivre le déplacement d'un individu dans le réseau de transport car il est possible de retracer l'itinéraire suivi à partir des enregistrements effectués par les bornes 140 installées dans les bus 131.

En corrélant les enregistrements effectués par les bornes 140 avec les horaires des bus 131 ou avec la position en temps réel des bus 131 et les positions des arrêts, il est possible de déterminer avec précision l'itinéraire effectué par l'individu 110 grâce aux signaux collectés passivement par le smartphone 120 porté par l'individu 110. L'itinéraire comprend les lignes de bus utilisés, les arrêts de montée et de descente du bus 131, les correspondances effectuées et les temps d'attente aux correspondances.

Il convient de souligner que le smartphone 120 n'est pas nécessairement détecté simultanément à la montée ou à la descente du bus 131. Il est ainsi nécessaire de déterminer l'arrêt 132 où l'individu 110 est monté, dit arrêt de montée, et l'arrêt 132 où l'individu est descendu, dit arrêt de descente.

L'arrêt de montée dans un bus 131 correspond dans le présent exemple au dernier arrêt 132 desservi sur la ligne 130 avant l'horodatage du premier signal relevé dans l'enregistrement, sur la base d'au moins l'un des critères suivants ;

- vitesse nulle du bus 131 ;
- ouverture de la porte du bus 131 ;
- validation d'un titre de transport ;

- augmentation de la charge du bus 131 lorsqu'un compteur de charge est installé dans le bus 131.

L'arrêt de descente d'un bus 131 correspond quant à lui au premier arrêt 132 desservi sur la ligne 130 après l'horodatage du dernier signal relevé dans l'enregistrement, sur la base d'au moins l'un des critères suivants :

- vitesse nulle du bus 131 ;
- ouverture de la porte du bus 131 ;
- diminution de la charge du bus 131 lorsqu'un compteur de charge est installé dans le bus 131.

Toutefois, lorsque le dispositif 100 est détecté de manière irrégulière ou avec des intervalles de temps importants, voire supérieurs au temps de trajet entre deux arrêts consécutifs, la détermination de l'arrêt de montée ou de descente peut être inexacte.

Afin d'améliorer la détermination de l'arrêt de montée ou de descente, une probabilité de descente est calculée à un arrêt en fonction de la déviation de la valeur de l'intervalle entre des deux derniers signaux de l'enregistrement par rapport à la valeur moyenne de l'intervalle de détection entre les signaux au cours de l'enregistrement, et/ou en fonction de la différence entre la durée de l'enregistrement et la durée du trajet de l'individu 110 dans le bus 131.

Une probabilité de montée est également calculée à un arrêt en fonction de la déviation de la valeur de l'intervalle entre des deux premiers signaux de l'enregistrement par rapport à la valeur moyenne de l'intervalle de détection entre les signaux au cours de l'enregistrement, et/ou en fonction de la différence entre la durée de l'enregistrement et la durée du trajet de l'individu 110 dans le bus 131.

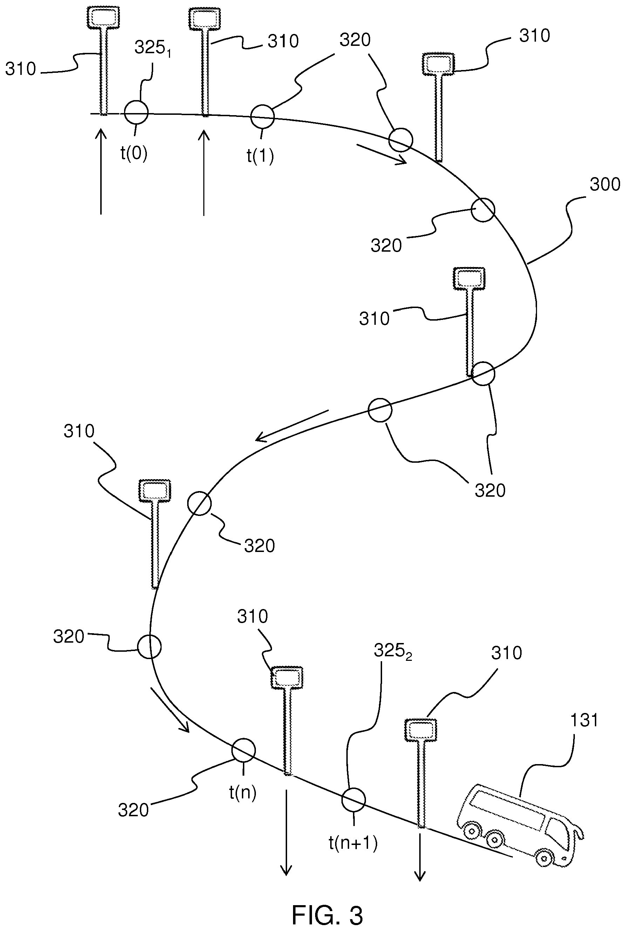

Plus généralement, une probabilité de trajet peut être calculée à partir d'un enregistrement donné, noté par la suite *E*. Le trajet correspondant à l'enregistrement *E* est illustré en figure 3 qui représente schématiquement le trajet 300 du bus 131 s'arrêtant à des arrêts 310.

L'enregistrement comprenant n relevés 320 de signaux détectés, chaque relevé étant effectué à un temps $t(i)$; $i \in [1, n]$, l'intervalle entre deux relevés consécutifs est égal :

$$d(i) = t(i) - t(i-1); i \in [1; n]$$

L'écart-type $\sigma$ entre deux relevés est ensuite calculé à partir de la moyenne arithmétique des intervalles entre deux relevés consécutifs de l'enregistrement.

A partir de l'écart-type $\sigma$, deux relevés fictifs 325 sont calculés :

- le premier relevé fictif $325_1$ correspondant à une fiction du début de l'enregistrement :

$$t(0) = t(1) - \sigma$$

- le deuxième relevé fictif $325_2$ correspondant à une fiction de la fin de l'enregistrement :

$$t(n + 1) = t(n) + \sigma$$

A partir de l'enregistrement $E = \{t(1), ..., t(n)\}$, trois enregistrements corrigés sont élaborés $E_1 = \{t(0), ..., t(n)\}$, $E_2 = \{t(1), ..., t(n + 1)\}$ et $E_3 = \{t(0), ..., t(n + 1)\}$.

Pour chacun de ces enregistrements, sont déterminés un arrêt de montée défini comme étant le premier arrêt en amont avant le premier relevé de l'enregistrement sur le trajet du bus, et un arrêt de descente défini comme étant le premier arrêt en aval après le dernier relevé de l'enregistrement sur le trajet du bus.

Il convient de souligner qu'un enregistrement corrigé peut comprendre un arrêt de montée et/ou un arrêt de descente identique(s) à celui et/ou à ceux de l'enregistrement initial.

La durée du trajet du bus entre deux arrêts donnés est calculée à partir des relevés de la position du bus en temps réel ou à partir de l'horaire du bus. Pour simplifier, on note $T_{trajet}(X)$ la durée du trajet du bus entre l'arrêt de montée et l'arrêt de descente correspondant à l'enregistrement $X$.

Pour chacun des quatre enregistrements, la différence entre la durée de l'enregistrement et la durée du trajet correspondant est ensuite calculée.

$$\delta(E) = t(n) - t(1) - T_{trajet}(E)$$

$$\delta(E_1) = t(n) - t(0) - T_{trajet}(E_1)$$

$$\delta(E_2) = t(n + 1) - t(1) - T_{trajet}(E_2)$$

$$\delta(E_3) = t(n + 1) - t(0) - T_{trajet}(E_3)$$

Le trajet le plus probable correspond à l'enregistrement $X$ pour lequel $\delta(X)$ est le plus faible. Il est ainsi possible de calculer la probabilité pour chaque enregistrement $X$ par la formule suivante :

$$P(X) = \frac{C(X)}{C(E) + C(E_1) + C(E_2) + C(E_3)}$$

où $C(X)$ est égal à l'inverse de $\delta(X)$.

Pour chaque enregistrement $X$, la probabilité de montée à l'arrêt de montée défini pour l'enregistrement $X$ et la probabilité de descente à l'arrêt défini pour l'enregistrement $X$ sont égales à $P(X)$.

Par l'intermédiaire du dispositif 100, il est ainsi possible de suivre en temps réel ou en temps différé le déplacement de l'individu 110 dans le réseau de transport.

Une analyse des déplacements effectués par plusieurs individus 110 dans le réseau de transport permet d'obtenir une cartographie des flux de déplacement représentatifs de l'ensemble de la population dans le réseau de transport. En effet, si un part suffisante, de l'ordre de 20 %, des individus formant la population disposent d'un dispositif électronique communiquant émettant des signaux aptes à être collectés par les bornes 140, une analyse des déplacements de chacun de ces individus représentatifs de la population permet d'obtenir une cartographie des flux de déplacements.

Afin de redresser les flux de déplacements collectés, deux méthodes complémentaires sont possibles :

- utiliser les données de la billettique, indiquant le nombre d'individus ayant validé son billet à l'entrée de chaque bus 131. Un facteur multiplicatif peut également être pris en compte afin de tenir compte de la fraude éventuelle ;
- utiliser les données d'un compteur de charge installé dans les bus 131.

Les flux de déplacements de la population peuvent ensuite être restitués en temps réel ou en temps différé sur l'écran 160 représentant un schéma du réseau de transport.

Les flux de déplacements sont également enregistrés à chaque instant de la journée et dans la durée. En connaissant les flux de déplacements passés et/ou présents, il est ainsi possible de prédire les flux de déplacements à venir, permettant ainsi de redimensionner l'offre du réseau de transport.

Autres avantages et caractéristiques de l'invention

Dans des variantes de mise en œuvre de l'invention, le réseau de transport comprend des véhicules, tels que des rames de métro, de trains ou tramways. Les véhicules sont munis d'une ou de plusieurs bornes de collecte des signaux. Lorsque plusieurs bornes de collecte sont utilisées dans un même véhicule, si un signal est reçu simultanément par plusieurs bornes, la position de l'émetteur du signal peut être déterminée dans l'espace.

Dans des variantes de mise en œuvre de l'invention, l'environnement peut être une surface de vente ou un domaine skiable où les bornes sont agencées pour déterminer une cartographie des flux de déplacements de la population à l'intérieur de l'environnement, ce qui permet par exemple de mettre en avant quelles sont les zones de l'environnement où les individus sont les plus présents.

**Revendications**

1. Procédé d'analyse du déplacement effectué par un individu dans un environnement comprenant un réseau de transport, l'individu portant un dispositif électronique communiquant, **caractérisé en ce que** l'environnement comprend une pluralité de bornes connectées à un serveur, chaque borne étant apte à collecter les signaux émis à portée de ladite borne, et **en ce que** le procédé comprend les étapes dans lesquelles :

   a) pour chaque passage de l'individu à portée d'une borne collectant au moins un signal émis par le dispositif électronique porté par l'individu pendant un cycle de détection de ladite borne, ladite borne relève ledit passage dans un enregistrement comprenant l'identification du dispositif électronique, la puissance instantanée du signal collecté au cours de l'enregistrement, la position de la borne et l'horodatage du signal collecté ;
   b) le serveur analyse le déplacement effectué par l'individu dans le réseau de transport en traitant les enregistrements,

   **en ce qu'**au moins une borne est installée dans un véhicule du réseau de transport,
   et **en ce qu'**il comprend avant l'étape b), une étape de sélection des enregistrements à traiter, effectuée par le serveur.

2. Procédé selon la revendication 1, **caractérisé en ce qu'**au cours de l'étape de sélection des enregistrements à traiter, un enregistrement est sélectionné lorsqu'il présente une durée supérieure à une valeur prédéterminée, la durée de l'enregistrement étant égale au temps écoulé entre le plus ancien et le plus récent signal relevé au cours de l'enregistrement.

3. Procédé selon l'une quelconque des revendications 1 à 2, **caractérisé en ce qu'**au cours de l'étape de sélection des enregistrements à traiter, un enregistrement est sélectionné lorsque la puissance de chaque signal de l'enregistrement dépasse un seuil prédéterminé.

4. Procédé selon l'une quelconque des revendications 1 à 3, **caractérisé en ce que** chaque enregistrement comprend également la vitesse de la borne dans l'environnement et **en ce qu'**au cours de l'étape de sélection des enregistrements à traiter, un enregistrement comprenant des signaux relevés par une borne mobile lorsque la vitesse de ladite borne est inférieure à cinq kilomètres par heure est sélectionné uniquement si l'enregistrement comprend également des signaux relevés par ladite borne lorsque la vitesse de ladite borne est supérieure à cinq kilomètres par heure.

5. Procédé selon l'une quelconque des revendications 1 à 4, **caractérisé en ce qu'**au cours de l'étape de sélection des enregistrements à traiter, la collecte d'un signal émis par un dispositif électronique est relevé quasi-simultanément par deux bornes distinctes, un seul des deux enregistrements est sélectionné selon l'un des critères suivants :

- l'enregistrement sélectionné correspond à l'enregistrement ayant la durée la plus longue, la durée de l'enregistrement étant égale au temps écoulé entre le plus ancien et le plus récent signal relevé au cours de l'enregistrement ;
- l'enregistrement sélectionné correspond à l'enregistrement ayant la puissance du signal la plus forte.

6. Procédé selon l'une quelconque des revendications 1 à 5, **caractérisé en ce qu'**au cours de l'étape de sélection des enregistrements à traiter, lorsqu'au moins deux enregistrements effectués par une même borne présentent des signaux ayant des variations de puissance similaires sur la majeure partie des deux enregistrements, un seul desdits enregistrements est sélectionné.

7. Procédé selon l'une quelconque des revendications 1 à 6, **caractérisé en ce que** l'environnement comprend des bornes passives.

8. Procédé selon l'une quelconque des revendications 1 à 7, **caractérisé en ce que** l'identification acquise est l'adresse MAC (acronyme anglais de « *Media Access Control* ») du dispositif électronique communiquant.

9. Procédé selon l'une quelconque des revendications 1 à 8, **caractérisé en ce que** le procédé comprend une étape de suivi d'un identifiant d'un dispositif électronique dans le temps.

10. Procédé selon l'une quelconque des revendications 1 à 9, **caractérisé en ce que** l'environnement est un réseau de transport comprenant un ou plusieurs modes de transports mettant en œuvre des véhicules équipés d'au moins une borne, et **en ce que** l'analyse du déplacement de l'individu comprend la détermination de l'itinéraire suivi par l'individu dans le réseau de transport, des correspondances effectuées par l'individu et des temps d'attente auxdites correspondances.

11. Procédé selon la revendication 10, **caractérisé en ce que** l'analyse du déplacement de l'individu comprend une sous-étape de calcul de probabilité de montée ou de descente de l'individu à un arrêt compris dans le réseau de transport.

12. Procédé selon l'une quelconque des revendications 10 à 11, **caractérisé en ce que** l'analyse du déplacement de l'individu comprend une sous-étape de calcul de probabilité d'un trajet lié à un enregistrement, dit enregistrement initial, et à au moins un enregistrement corrigé, l'enregistrement corrigé étant déterminé à partir de l'enregistrement initial auquel un relevé fictif est ajouté au début et/ou à la fin de l'enregistrement initial.

13. Procédé d'analyse des déplacements effectués par une population d'individus dans un environnement, **caractérisé en ce qu'**il met en œuvre un procédé d'analyse du déplacement d'un individu selon l'une quelconque des revendications 1 à 12, la population comprenant des individus portant un dispositif électronique communiquant.

14. Procédé selon la revendication 13, **caractérisé en ce que** l'environnement est un réseau de transport comprenant un système de billettique et **en ce que** les déplacements de la population sont déterminés à partir des déplacements d'individus portant un dispositif électronique communiquant et des données de la billettique.

15. Procédé selon l'une quelconque des revendications 13 à 14, **caractérisé en ce que** l'environnement est un réseau de transport comprenant un ou plusieurs modes de transports mettant en œuvre des véhicules équipés d'au moins une borne et d'un compteur de charge et **en ce que** les déplacements de la population sont déterminés à partir des déplacements d'individus portant un dispositif électronique communiquant et de données du compteur de charge.

16. Procédé selon l'une quelconque des revendications 13 à 15, **caractérisé en ce qu'**il comprend une étape de prédiction des flux de déplacement à partir de l'analyse des déplacements d'individus précédemment enregistrés.

17. Dispositif d'analyse des déplacements d'au moins un individu dans un environnement comprenant un réseau de transport, l'un au moins des individus portant un dispositif électronique communiquant, **caractérisé en ce que** le dispositif comprend :

- une pluralité de bornes de collecte passive des signaux émis par des dispositifs électroniques situés à portée de chaque borne, la collecte permettant d'effectuer un enregistrement comprenant l'identification du dispositif électronique, la puissance instantanée du signal émis à chaque instant de l'enregistrement, la position de la borne et l'horodatage du début et de la fin de l'enregistrement, au moins une borne étant installée dans un véhicule du réseau de transport ;
- un serveur distant traitant les enregistrements transmis par les bornes pour déterminer les déplacements effectués par au moins un individu dans le réseau de transport en traitant les enregistrements **en ce qu'**il comprend avant l'étape d'analyse, une étape de sélection, par le serveur distant, des enregistrements à traiter. ;
- des moyens de restitution des déplacements effectués par les individus dans le réseau de transport.

**18.** Dispositif selon la revendication 17, **caractérisé en ce qu'**il comprend également des moyens de géolocalisation en temps réel de chaque borne.

**19.** Dispositif selon l'une quelconque des revendications 17 à 18, **caractérisé en ce que** l'environnement est un réseau de transport comprenant une pluralité de véhicules permettant de déplacer au moins un individu dans l'environnement, la majorité des véhicules comprenant au moins une borne de collecte et **en ce que** les moyens de restitution des déplacements comprennent un écran affichant les flux de déplacements des individus dans le réseau de transport.

**20.** Dispositif selon l'une quelconque des revendications 17 à 19, **caractérisé en ce que** l'environnement est un réseau de transport comprenant une pluralité de véhicules permettant de déplacer au moins un individu dans l'environnement, la majorité des véhicules comprenant au moins une borne de collecte et un odomètre, et **en ce que** l'enregistrement effectué par la borne comprend la vitesse acquise par l'odomètre du véhicule.

**Patentansprüche**

**1.** Verfahren zur Analyse der von einer Einzelperson durchgeführten Bewegung in einer Umgebung, die ein Transportnetz umfasst, wobei die Einzelperson eine kommunizierende elektronische Vorrichtung trägt, **dadurch gekennzeichnet, dass** die Umgebung eine Vielzahl von Anschlussstellen umfasst, die mit einem Server verbunden sind, wobei jede Anschlussstelle imstande ist, die Signale einzufangen, die in Reichweite der Anschlussstelle ausgegeben werden, und dadurch, dass das Verfahren die folgenden Schritte umfasst:

a) bei jedem Durchgang der Einzelperson in Reichweite einer Anschlussstelle, die während eines Detektionszyklus der Anschlussstelle mindestens ein Signal einfängt, das von der elektronischen Vorrichtung ausgegeben wird, die von der Einzelperson getragen wird, erhebt die Anschlussstelle den Durchgang in einer Aufzeichnung, die die Identifizierung der elektronischen Vorrichtung, die momentane Leistung des im Laufe der Aufzeichnung eingefangenen Signals, die Position der Anschlussstelle und den Zeitstempel des eingefangenen Signals umfasst;
b) der Server analysiert die von der Einzelperson durchgeführte Bewegung in dem Transportnetz durch eine Bearbeitung der Aufzeichnungen,

dadurch, dass mindestens eine Anschlussstelle in einem Fahrzeug des Transportnetzes installiert ist, und dadurch, dass es vor dem Schritt b) einen Schritt des Auswählens der zu bearbeitenden Aufzeichnungen umfasst, der von dem Server ausgeführt wird.

**2.** Verfahren nach Anspruch 1, **dadurch gekennzeichnet, dass** im Laufe des Schrittes des Auswählens der zu bearbeitenden Aufzeichnungen eine Aufzeichnung ausgewählt wird, wenn sie eine Dauer aufweist, die länger als ein vorbestimmter Wert ist, wobei die Dauer der Aufzeichnung gleich der abgelaufenen Zeit zwischen dem ältesten und dem neuesten Signal ist, das im Laufe der Aufzeichnung erhoben wird.

**3.** Verfahren nach einem der Ansprüche 1 bis 2, **dadurch gekennzeichnet, dass** im Laufe des Schrittes des Auswählens der zu bearbeitenden Aufzeichnungen eine Aufzeichnung ausgewählt wird, wenn die Leistung eines jeden Aufzeichnungssignals einen vorbestimmten Schwellenwert übersteigt.

**4.** Verfahren nach einem der Ansprüche 1 bis 3, **dadurch gekennzeichnet, dass** jede Aufzeichnung auch die Geschwindigkeit der Anschlussstelle in der Umgebung umfasst und dadurch, dass im Laufe des Schrittes des Auswählens der zu bearbeitenden Aufzeichnungen, eine Aufzeichnung, die Signale umfasst, die von einer mobilen Anschlussstelle erhoben werden, wenn die Geschwindigkeit der Anschlussstelle kleiner als fünf Kilometer pro Stunde ist, und nur ausgewählt wird, falls die Aufzeichnung auch Signale umfasst, die von der Anschlussstelle erhoben werden, wenn die Geschwindigkeit der Anschlussstelle größer als fünf Kilometer pro Stunde ist.

**5.** Verfahren nach einem der Ansprüche 1 bis 4, **dadurch gekennzeichnet, dass** im Laufe des Schrittes des Auswählens der zu bearbeitenden Aufzeichnungen das Einfangen eines Signals, das von einer elektronischen Vorrichtung ausgegeben wird, quasi zeitglich durch zwei unterschiedliche Anschlussstellen erhoben wird, wobei eine einzige der beiden Aufzeichnungen entsprechend einem der folgenden Kriterien ausgewählt wird:

- die ausgewählte Aufzeichnung entspricht der Aufzeichnung, die die längste Dauer aufweist, wobei die Dauer der Aufzeichnung gleich der abgelaufenen Zeit zwischen dem ältesten und dem neuesten Signal ist, das im Laufe der Aufzeichnung erhoben wird;
- die ausgewählte Aufzeichnung entspricht der Aufzeichnung, die die stärkste Leistung des Signals aufweist.

6. Verfahren nach einem der Ansprüche 1 bis 5, **dadurch gekennzeichnet, dass** im Laufe des Schrittes des Auswählens der zu bearbeitenden Aufzeichnungen, wenn mindestens zwei durch eine selbe Anschlussstelle durchgeführte Aufzeichnungen Signale aufweisen, die über den Großteil der beiden Aufzeichnungen ähnliche Leistungsvariationen aufweisen, eine einzige der Aufzeichnungen ausgewählt wird.

7. Verfahren nach einem der Ansprüche 1 bis 6, **dadurch gekennzeichnet, dass** die Umgebung passive Anschlussstellen umfasst.

8. Verfahren nach einem der Ansprüche 1 bis 7, **dadurch gekennzeichnet, dass** erfasste Identifizierung die MAC Adresse (englische Abkürzung für "*Media Access Control*") der kommunizierenden elektronischen Vorrichtung ist.

9. Verfahren nach einem der Ansprüche 1 bis 8, **dadurch gekennzeichnet, dass** das Verfahren einen Schritt zur Überwachung einer Kennung einer elektronischen Vorrichtung über die Zeit hinweg umfasst.

10. Verfahren nach einem der Ansprüche 1 bis 9, **dadurch gekennzeichnet, dass** die Umgebung ein Transportnetz ist, das einen oder mehrere Transportmodi umfasst, die Fahrzeuge einsetzen, die mit mindestens einer Anschlussstelle ausgerüstet sind, und dadurch, dass die Analyse der Bewegung der Einzelperson die Bestimmung des von der Einzelperson verfolgten Weges in dem Transportnetz, durch die Einzelperson durchgeführte Anschlussfahrten und Wartezeiten auf die Anschlussfahrten umfasst.

11. Verfahren nach Anspruch 10, **dadurch gekennzeichnet, dass** die Analyse der Bewegung der Einzelperson einen Teilschritt des Berechnens einer Wahrscheinlichkeit eines Einsteigens oder Aussteigens der Einzelperson an einer Haltestelle umfasst, die in dem Transportnetz enthalten ist.

12. Verfahren nach einem der Ansprüche 10 bis 11, **dadurch gekennzeichnet, dass** die Analyse der Bewegung der Einzelperson einen Teilschritt des Berechnens einer Wahrscheinlichkeit einer mit einer anfänglichen Aufzeichnung genannten Aufzeichnung und mindestens einer korrigierten Aufzeichnung verknüpften Strecke umfasst, wobei die korrigierte Aufzeichnung aus der anfänglichen Aufzeichnung bestimmt wird, zu der zu Beginn und/oder am Ende der anfänglichen Aufzeichnung eine fiktive Erhebung hinzugefügt wird.

13. Verfahren zur Analyse der Bewegungen, die von einer Population aus Einzelpersonen in einer Umgebung durchgeführt werden, **dadurch gekennzeichnet, dass** es ein Verfahren zur Analyse der Bewegung einer Einzelperson nach einem der Ansprüche 1 bis 12 umsetzt, wobei die Population Einzelpersonen umfasst, die eine kommunizierende elektronische Vorrichtung tragen.

14. Verfahren nach Anspruch 13, **dadurch gekennzeichnet, dass** die Umgebung ein Transportnetz ist, das ein Ticketing-System umfasst, und dadurch, dass die Bewegungen der Population aus den Bewegungen von Einzelpersonen, die eine kommunizierende elektronische Vorrichtung tragen, und den Daten aus dem Ticketing bestimmt werden.

15. Verfahren nach einem der Ansprüche 13 bis 14, **dadurch gekennzeichnet, dass** die Umgebung ein Transportnetz ist, das ein oder mehrere Transportmodi umfasst, die Fahrzeuge einsetzen, die mit mindestens einer Anschlussstelle und einem Lastzähler ausgerüstet sind, und dadurch, dass die Bewegungen der Population aus den Bewegungen der Einzelpersonen, die eine kommunizierende elektronische Vorrichtung tragen, und den Daten aus dem Lastzähler bestimmt werden.

16. Verfahren nach einem der Ansprüche 13 bis 15, **dadurch gekennzeichnet, dass** es einen Schritt der Vorhersage der Bewegungsströme aus der Analyse der zuvor aufgezeichneten Bewegungen von Einzelpersonen umfasst.

17. Vorrichtung zur Analyse der Bewegungen mindestens einer Einzelperson in einer Umgebung, die ein Transportnetz umfasst, wobei mindestens eine der Einzelpersonen eine kommunizierende elektronische Vorrichtung trägt, **dadurch gekennzeichnet, dass** die Vorrichtung umfasst:

- eine Vielzahl von Anschlussstellen zum passiven Einfangen der Signale, die von elektronischen Vorrichtungen ausgegeben werden, die sich in Reichweite jeder Anschlussstelle befinden, wobei es das Einfangen ermöglicht, eine Aufzeichnung durchzuführen, die die Identifizierung der elektronischen Vorrichtung, die momentane Leistung des zu jedem Zeitpunkt der Aufzeichnung ausgegebenen Signals, die Position der Anschlussstelle und den Zeitstempel des Anfangs und des Endes der Aufzeichnung umfasst, wobei mindesten eine Anschlussstelle in einem Fahrzeug des Transportnetzes installiert ist;

- einen Fernserver, der die von den Anschlussstellen übertragenen Aufzeichnungen bearbeitet, um die Bewegungen, die von mindestens einer Einzelperson in dem Transportnetz durchgeführt werden, durch Bearbeitung der Aufzeichnungen zu bestimmen, dadurch, dass er vor dem Schritt des Analysierens einen Schritt des Auswählens, durch den Fernserver, von zu bearbeitenden Aufzeichnungen umfasst;

- Mittel zur Wiedergabe der durch die Einzelpersonen in dem Transportnetz durchgeführten Bewegungen.

**18.** Vorrichtung nach Anspruch 17, **dadurch gekennzeichnet, dass** sie auch Mittel zur Geolokalisierung jeder Anschlussstelle in Echtzeit umfasst.

**19.** Vorrichtung nach einem der Ansprüche 17 bis 18, **dadurch gekennzeichnet, dass** die Umgebung ein Transportnetz ist, das eine Vielzahl von Fahrzeugen umfasst, die es ermöglichen, mindestens eine Einzelperson in der Umgebung zu bewegen, wobei der Großteil der Fahrzeuge mindestens eine Anschlussstelle zum Einholen umfasst, und dadurch, dass die Mittel zur Wiedergabe der Bewegungen einen Bildschirm umfassen, der die Bewegungsströme der Einzelpersonen in dem Transportnetz anzeigt.

**20.** Vorrichtung nach einem der Ansprüche 17 bis 19, **dadurch gekennzeichnet, dass** die Umgebung ein Transportnetz ist, das eine Vielzahl von Fahrzeugen umfasst, die es ermöglichen, mindestens eine Einzelperson in der Umgebung zu bewegen, wobei der Großteil der Fahrzeuge mindestens eine Anschlussstelle zum Einholen und einen Kilometerzähler umfasst, und dadurch, dass die durch die Anschlussstelle durchgeführte Aufzeichnung die durch den Kilometerzähler des Fahrzeugs erfasste Geschwindigkeit umfasst.

## Claims

**1.** A method for analysing the movement performed by a person in an environment comprising a transport network, the person carrying a communicating electronic device, **characterised in that** the environment comprises a plurality of terminals connected to a server, each terminal being capable of collecting the signals emitted within a range of said terminal, and **in that** the method comprises the steps wherein:

a) for each passage of the person within a range of a terminal collecting at least one signal emitted by the electronic device carried by the person during a detection cycle of said terminal, said terminal detects said passage in a recording comprising the identification of the electronic device, the instantaneous power of the signal collected during recording, the position of the terminal and the timestamp of the collected signal;

b) the server analyses the movement performed by the person in the transport network by processing the recordings,

**in that** at least one terminal is installed in a vehicle of the transport network,
and **in that** it comprises before step b), a step of selecting the recordings to be processed, performed by the server.

**2.** The method according to claim 1, **characterised in that** during the step of selecting the recordings to be processed, a recording is selected when it has a duration greater than a predetermined value, the recording duration being equal to the time elapsed between the oldest and the most recent signal detected during recording.

**3.** The method according to any one of claims 1 to 2, **characterised in that** during the step of selecting the recordings to be processed, a recording is selected when the power of each signal of the recording exceeds a predetermined threshold.

**4.** The method according to any one of claims 1 to 3, **characterised in that** each recording also comprises the speed of the terminal in the environment and **in that** during the step of selecting the recordings to be processed, a recording comprising signals detected by a mobile terminal when the speed of said terminal is less than five kilometres per hour is selected only if the recording also includes signals detected by said terminal when the speed of said terminal is greater than five kilometres per hour.

**5.** The method according to any one of claims 1 to 4, **characterised in that** during the step of selecting the recordings to be processed, the collection of a signal emitted by an electronic device is detected almost simultaneously by two separate terminals, only one of the two recordings is selected according to one of the following criteria:

- the selected recording corresponds to the recording with the longest duration, the recording duration being equal to the time elapsed between the oldest and the most recent signal detected during the recording;
- the selected recording corresponds to the recording with the strongest signal strength.

6. The method according to any one of claims 1 to 5, **characterised in that** during the step of selecting the recordings to be processed, when at least two recordings performed by the same terminal have signals having similar power variations over the major part of the two recordings, only one of said recordings is selected.

7. The method according to any one of claims 1 to 6, **characterised in that** the environment comprises passive terminals.

8. The method according to any one of claims 1 to 7, **characterised in that** the identification acquired is the MAC (acronym for "Media Access Control") address of the communicating electronic device.

9. The method according to any one of claims 1 to 8, **characterised in that** the method comprises a step of monitoring an identifier of an electronic device over time.

10. The method according to any one of claims 1 to 9, **characterised in that** the environment is a transport network comprising one or more transport modes implementing vehicles equipped with at least one terminal, and **in that** the person's movement analysis comprises the determination of the route followed by the person in the transport network, correspondences made by the person and waiting times for said correspondences.

11. The method according to claim 10, **characterised in that** the person's movement analysis comprises a sub-step of calculating the probability of boarding or descending of the person at a stop comprised in the transport network.

12. The method according to any one of claims 10 to 11, **characterised in that** the person's movement analysis comprises a sub-step for calculating the probability of a path linked to a recording, called initial recording, and at least one corrected recording, the corrected recording being determined from the initial recording to which a fictitious detection is added at the beginning and/or at the end of the initial recording.

13. The method for analysing the movements performed by a population of persons in an environment, **characterised in that** it implements a method for analysing the movement of a person according to any one of claims 1 to 12, the population comprising persons carrying an electronic communicating device.

14. The method according to claim 13, **characterised**

**in that** the environment is a transport network comprising a ticketing system and **in that** the movements of the population are determined from the movements of persons carrying an electronic communicating device and ticketing data.

15. The method according to any one of claims 13 to 14, **characterised in that** the environment is a transport network comprising one or more transport modes implementing vehicles equipped with at least one terminal and a load counter and **in that** the movements of the population are determined from the movements of persons carrying an electronic communicating device and from data from the load counter.

16. The method according to any one of claims 13 to 15, **characterised in that** it comprises a step of predicting movement flows from the analysis of movements of persons previously recorded.

17. A device for analysing the movements of at least one person in an environment comprising a transport network, at least one of the persons carrying a communicating electronic device, **characterised in that** the device comprises:

- a plurality of terminals for passive collection of the signals emitted by electronic devices located within a range of each terminal, the collection allowing to carry out a recording comprising the identification of the electronic device, the instantaneous power of the signal emitted at each instant of the recording, the position of the terminal and the timestamp of the beginning and the end of the recording, at least one terminal being installed in a vehicle of the transport network;
- a remote server processing the recordings transmitted by the terminals to determine the movements performed by at least one person in the transport network by processing the recordings **in that** it comprises before the analysis step, a step of selecting, by the remote server, the recordings to be processed.
- means for restituting the movements made by persons in the transport network.

18. The device according to claim 17, **characterised in that** it also comprises means for geolocating each terminal in real time.

19. The device according to any one of claims 17 to 18, **characterised in that** the environment is a transport network comprising a plurality of vehicles allowing to move at least one person in the environment, the majority of vehicles comprising at least one collection terminal and **in that** the means for restituting the movements comprise a screen displaying the movement flows of persons in the transport network.

20. The device according to any one of claims 17 to 19, **characterised in that** the environment is a transport network comprising a plurality of vehicles allowing the movement of at least one person in the environment, the majority of vehicles comprising at least one collection terminal and an odometer, and **in that** the recording performed by the terminal comprises the speed acquired by the odometer of the vehicle.

FIG. 1

200

210

220

221

222

223

224

225

230

FIG. 2

FIG. 3

**RÉFÉRENCES CITÉES DANS LA DESCRIPTION**

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- WO 2016038415 A
- US 2009210141 A
- WO 2014037949 A